# EUROPEAN PATENT SPECIFICATION

(11) **EP 0 599 643 B1**
(45) Date of publication and mention of the grant of the patent: **15.05.1996**
(21) Application number: 93309404.7
(22) Date of filing: 25.11.1993
(51) Int. Cl.: B60C 1/00, C08K 3/26, C08K 3/32, C08K 5/09, C08L 9/06

(54) **Rubber compositions of tyre tread**
Kautschukmischungen für Reifenlauffläche
Compositions de caoutchouc pour bande de roulement

(30) Priority: 26.11.1992 JP 317193/92
(43) Date of publication of application: 01.06.1994
(73) Proprietor: SUMITOMO RUBBER INDUSTRIES, LTD., Chuo-ku Kobe-shi Hyogo-ken (JP)
(72) Inventor: Matsuo, Toshiro, Kakogawa-shi, Hyogo-ken (JP)
(74) Representative: Stewart, Charles Geoffrey

(56) References cited:
- EP-A- 0 346 147
- DE-A- 2 726 039
- GB-A- 2 103 625
- DATABASE WPI Week 9203, Derwent Publications Ltd., London, GB; AN 019219 & JP-A-3 266 706 (YOKOHAMA RUBBER KK) 27 November 1991
- DATABASE WPI Week 9203, Derwent Publications Ltd., London, GB; AN 019219 & JP-A-3 266 706

## Description

The present invention relates to a rubber composition for tyre treads, which provides improved steering stability in high performance tyres for passenger cars, particularly sports cars, and ensures safety during high speed driving.

Recently for high performance tyres for passenger cars, it is demanded for tyres to drive safely at high speed, which makes a great requirement for improved properties of tyre tread regions. Particularly, the requirements for tyre treads are directed to grip on a road surface (grip property), response in high speed driving and high abrasion resistance.

Until now, in order to satisfy both properties of grip and abrasion resistance, reinforcing characteristics of carbon black have been improved, for example by enlarging the specific surface area of the carbon black particles (using carbon black with a smaller diameter), and by making their flocculats (structures) larger. To ensure safety during high speed driving, a high grip property in high speed driving has been obtained by using a styrene-butadiene rubber (hereinafter referred to as "SBR") with a high bonded styrene content, as the rubber material for a rubber component used for tyre tread regions.

When using a SBR with a high bonded styrene content and a highly reinforcing carbon black, a high grip property can be obtained. However, the use of these increases the amount of heat generation of the tread which softens the tread rubber due to the heat generated during driving, which makes rigidity of the tread region decrease and thus renders the steering stability unstable.

An object of the present invention is to provide rubber compositions for a tyre tread which can ensure safety during high speed driving, by preventing the lowering of rigidity of the tread due to heat generation of the tread rubber, and the resultant lowering of steering stability.

According to the present invention, there is provided a rubber composition for a tyre tread, which comprises an emulsion-polymerised SBR with a bonded styrene content of not less then 40% percent by weight, which is contained in an amount of 10 to 100% in a rubber component, and a sodium-containing basic inorganic compound and/or a basic sodium salt of organic acid which is blended at an amount of 0.5 to 5.0 parts per 100 parts of the rubber component.

In the specification parts by weight are meant unless otherwise stated.

The rubber composition of the present invention may be prepared by blending, per 100 parts of the rubber component, 0.5 to 5.0 parts of the sodium-containing basic inorganic compound and/or the basic sodium salt of organic acid, carbon black and the other usual components which are generally blended with such rubber compositions.

In the rubber component, the emulsion-polymerised SBR with the bonded styrene content of not less than 40%, preferably 40 to 50% is contained in an amount of 10 to 100%, preferably 20 to 100%, or more preferably 50 to 100%. If the amount of the emulsion-polymerised SBR with the bonded styrene content of not less than 40% is smaller than 10% or the bonded styrene content is smaller than 40%, the grip property is insufficient.

The rubber component may contain, other than the emulsion-polymerised SBR with the bonded styrene content of not less than 40%, a synthetic rubber, a natural rubber, or a mixture thereof. Examples of the synthetic rubber are, for instance, a SBR having a silicon atom or tin-butadienyl bond which is prepared in a hydrocarbon solution in the presence of an organic lithium compound (so-called "solution-polymerised SBR"), an emulsion-polymerised SBR with a bonded styrene content of less than 40%, butadiene rubber (BR), isoprene rubber (IR), butyl rubber (IIR), halogenated butyl rubber, or the like.

The bonded styrene content is measured according to the following method. About 5ml of a sample which is ground as finely as possible is put into a beaker charged with about 100ml of isopropyl alcohol to coagulate the finely ground sample. The coagulant is taken out and washed with isopropyl alcohol, and then the remaining alcohol is removed by clamping between filter paper sheets. The coagulant is put in 50ml of a mixed solvent of toluene (90 parts by volume) and isopropyl alcohol (10 parts by volume), and is heated on a hot plate of 80° to 100°C for 5 minutes. The rubber solution obtained is poured into isopropyl alcohol, and the precipitate is washed several times with isopropyl alcohol, then dried for one hour in a reduced pressure dryer of 100°C under a vacuum of 24 to 25mm Hg. The subsequent procedures are carried out according to JIS K 6383 (Testing Method for Synthetic Rubber SBR). The bonded styrene content is calculated from the measured refractive index.

Both the sodium-containing inorganic compound and the sodium salt of organic acid are basic compounds which show a basicity pH of approximately 9 to 14 when 1N aqueous solution is measured. Examples of the sodium-containing inorganic compound are, for instance, sodium hydrogen carbonate, anhydrous sodium carbonate, sodium hydroxide, sodium polyphosphate, sodium metaphosphate and an admixture thereof. Compounds which contain sodium but are not basic such as sodium sulfate, sodium thiosulfate, sodium nitrate and sodium chloride are excluded. Sodium hydrogen carbonate is especially preferably in view of its less bad influence on human beings, since sodium hydrogen carbonate has a low basicity and is effective for preventing the lowering of physical properties of the tread rubbers in respect of heat-generation in tyres. Examples of a sodium salt of organic acid are, for instance, sodium acetate, sodium propinate, sodium butyrate, sodium benzoate, sodium oleate, sodium alginate, sodium carboxymethyl cellulose, or an admixture thereof. Sodium benzoate is especially preferable in view of excellent reactivity with rubbers. The sodium-containing inorganic compound and the sodium salt of organic acid may be used in combination.

The sodium-containing inorganic compound and/or the sodium salt of organic acid (hereinafter they may be referred to as "sodium-containing compound") is blended in an amount of 0.5 to 5.0 parts, preferably 0.5 to 4.0 parts, more preferably 1.0 to 4.0 parts per 100 parts of the rubber component. If the amount of sodium-containing compound is less than 0.5 parts, there is a tendency that the effect for preventing the lowering of the physical properties at high temperature cannot be obtained. If more than 5 parts, the sodium-containing compound tends to be non-uniformly dispersed and the resulting rubber composition tends to be inferior in abrasion resistance and crack resistance.

As carbon black, there may be used, for example, furnace black which is usually utilised for reinforcing rubbers.

In the rubber compositions of the tyre tread of the present invention, it is preferable that the carbon black is one which has an average particle size of not more than 25mm (namely carbon blacks of ISAF or SAF, or a higher class), and that the carbon black is blended in an amount of not less than 70 parts per 100 parts of the rubber component. In the present invention, the average particle size is the number average particle size measured by using a transmission electron microscope. For example, when a carbon black which has an average particle size of more than 25nm (so-called HAF carbon black or a lower class) is used alone, the required grip property cannot be obtained. Examples of carbon black which have an average particle size of not more than 25nm are, for instance, ISAF (having an average particle size of 20 to 25nm) or SAF (having an average particle size of 11 to 19nm), a fine carbon black having an average particle size of not more than 10nm which belongs to a hard region of a smaller average particle size, or the like. The amount of carbon black is more preferably 70 to 110 parts, most preferably 80 to 110 parts per 100 parts of the rubber component. If the amount of such carbon black is less than 70 parts, there is a tendency that a high grip property cannot be obtained.

For the other usual components, there may be used additives which are used in rubber mixing in the normal production processes for tyre treads, namely, vulcanising agents, vulcanisation accelerators, vulcanising aids, rubber antioxidants, process oils and the like. Their blending amounts are not specifically restricted but within ranges which do not obstruct the purpose of the present invention.

The rubber composition of the tyre tread of the present invention is prepared, usually, first by base-mixing the rubber component, the sodium-containing compound and the additives other than the vulcanising agent and the vulcanisation accelerator, in a Banbury mixer, the admixing thereto the vulcanising agent and the vulcanisation accelerator in mixing rolls of a Banbury mixer.

The resultant rubber tyre tread composition is extruded in a given form. After moulding, the finished cured tread is produced by the vulcanisation. A tyre having the characteristic features regarding the rubber composition of the tyre tread of the present invention can be obtained by the usual production process of tyres.

The present invention is more specifically described and explained by means of the following Examples. The present invention, however, is not limited to the Examples.

### EXAMPLE 1

A rubber composition for a tyre tread was prepared by base-mixing a mixture of 137.5 parts SBR including 37.5 parts of an aromatic extender oil of an emulsion-polymerised SBR (available from Nippon Zeon Co Limited) (referred to as SBR (A) in the following Tables), 80.0 parts of carbon black N110 (having an average particle size of 18nm), 0.5 part of sodium hydrogen carbonate, 2.0 parts of Sunnoc Wax, 2.0 parts of a rubber antioxidant 6c (n-phenyl-N'-(1,3-dimethylbutyl)-p-phenylenediamine), 2.0 parts of stearic acid and 3.0 parts of zinc oxide in a BR type Banbury mixer (having a volume of 1.8 litres; available from Kobe Steel Limited) for four minutes and subsequently admixing 2.0 parts of sulfur and 1.0 part of a vulcanisation accelerator CZ in an eight inch roll mixer (available from Osaka Roll Kabushiki Kaisha).

The resulting rubber composition was shaped into a rubber sheet having a thickness of 2 to 3mm with the above-mentioned roller mixer. These rubber sheets were laminated to form an extrusion tyre tread. A steel radial tyre (having a size of 225/50R16) was made by using the tread rubber of the extrusion.

The above-mentioned rubber composition of the tyre tread and the tyre were tested in the following items. The results are shown in Table 1.

### Viscoelasticity (E*)

The rubber composition was vulcanised at a temperature of 170°C for 15 minutes, and shaped into a test specimen having a thickness of 2mm and a width of 4mm.

Viscoelasticities E* at 50°C and at 90°C for the test specimen were measured respectively under conditions of an initial elongation of 10%, a dynamic strain of 0.5% and a vibration frequency of 10Hz using a viscoelastic spectrometer (available from Kabushiki Kaisha Iwamoto Seisakusho). Also, the ratio of E* at 90°C to E* at 50°C was calculated.

### Ingredient Dispersion

The rubber composition was vulcanised at a temperature of 170°C for 15 minutes. A small chip of the resulting rubber was cut out and sliced into a thin film by a microtome (type 1400, available from LEITZ). Dispersion was evaluated by observing the thin film with a microscope.

### Actual Car Test

Steel radial tyres made in the same manner as disclosed above were attached to a domestic 3000cc passenger car. Steering stability and the response property of the car and the grip limit were tested on the Okayama testing course of Sumitomo Rubber Industries Limited with two passengers. The results of sensory evaluations are represented as an index to a base value (100) of Comparative Example 1 in which no sodium-containing compound is blended. The grip limit was evaluated by running the car on an asphalt road circularly at a radius of 40m and measuring the speed at which the circle having a radius of 40m cannot be traced by the car even if the driver tries to maintain the circle.

### Examples 2 to 3 and Comparative Examples 1 to 3

Rubber compositions were prepared in the same manner as in Example 1 using the same blend as that of Example 1 except that sodium hydrogen carbonate in powder or granular form was used in respective amounts as described in Table 1. Steel radial tyres were made in the same manner as in Example 1 by using these rubber composition of the tyre tread.

The same tests as in Example 1 were carried out with respect to the resulting rubber compositions of the tyre tread and tyres. The results are shown in Table 1.

**TABLE 1**

| | Comparative Example 1 | Comparative Example 2 | Example 1 | Example 2 | Example 3 | Comparative Example 3 |
|---|---|---|---|---|---|---|
| SBR (A) *1 | 137.5 | 137.5 | 137.5 | 137.5 | 137.5 | 137.5 |
| Carbon Black N110 | 80.0 | 80.0 | 80.0 | 80.0 | 80.0 | 80.0 |
| Sodium Hydrogen Carbonate | - | 0.3 | 0.5 | 2.0 | 5.0 | 10.0 |
| E* @ 50°C | 210 | 212 | 221 | 214 | 216 | 221 |
| E* @ 90°C | 90 | 97 | 111 | 113 | 116 | 117 |
| E* @ 90°C/E* @ 50°C | 0.43 | 0.46 | 0.50 | 0.53 | 0.54 | 0.53 |
| Chemical dispersion | - | good | good | good | slightly bad | bad |
| Steering stability and response property of actual car | 100 | 100 | 105 | 108 | 110 | 109 |
| Grip limit height of actual car | 100 | 100 | 100 | 101 | 100 | 100 |

### Example 4 to 5 and Comparative Example 4

Rubber compositions for tyre treads were prepared in the same manner as in Example 1 by using the same blend as that of Example 2 except that the rubber component was changed as shown in Table 2. In Table 2, SBR (A) is an emulsion-polymerised SBR with a bonded styrene content of 45% (available from Nippon Zeon Co Limited), SBR (B) is an emulsion-polymerised SBR with a bonded styrene content of 40% (available from Nippon Zeon Co Limited), SBR (C) is an emulsion-polymerised SBR with a bonded styrene content of 35% (available from Nippon Zeon Co Limited), SBR (D) is a solution-polymerised SBR with a bonded styrene content of 29% and a vinyl content of 39% per mole (available from Nippon Zeon Co Limited). Steel radial tyres were made in the same manner as in Example 1 by using these rubber compositions of tyre tread.

The same tests as in Example 1 were carried out with respect to the resulting rubber compositions of tyre tread and tyres. The results are shown in Table 2.

**TABLE 2**

| | Example 4 | Comparative Example 4 | Example 5 |
|---|---|---|---|
| SBR (A) *1 | | | 27.5 |
| SBR (B) *2 | 137.5 | | |
| SBR (C) *3 | | 137.5 | |
| SBR (D) *4 | | | 110.0 |
| Carbon Black N110 | 80.0 | 80.0 | 80.0 |
| Sodium Hydrogen Carbonate | 2.0 | 2.0 | 2.0 |
| E* @ 50°C | 225 | 230 | 226 |
| E* @ 90°C | 116 | 122 | 124 |
| E* @ 90°C/E* @ 50°C | 0.52 | 0.53 | 0.55 |
| Chemical dispersion | good | good | good |
| Steering stability and response property of actual car | 109 | 108 | 108 |
| Grip limit height of actual car | 98 | 92 | 99 |

| | | | |
|---|---|---|---|
| *1 Emulsion-polymerised SBR with a bonded styrene content of 45% | | | |
| *2 Emulsion-polymerised SBR with a bonded styrene content of 40% | | | |
| *3 Emulsion-polymerised SBR with a bonded styrene content of 35% | | | |
| *4 Solution-polymerised SBR with a bonded styrene content of 27% and a vinyl content of 39% by mole. | | | |
| All for SBR containing 37.5 parts of extending oil per 100 parts of polymer. | | | |

### Examples 6 to 7 and Comparative Examples 5 to 9

Rubber compositions were prepared in the same manner as in Example 1 by using the same blend as that of Example 2 except that sodium hydrogen carbonate was changed to inorganic compounds as shown in Table 3. Steel radial tyres were made in the same manner as in Example 1 by using these rubber compositions of tyre tread.

The same tests as in Example 1 were carried out with respect to the resulting rubber compositions of tyre tread and tyres. The results are shown in Table 3.

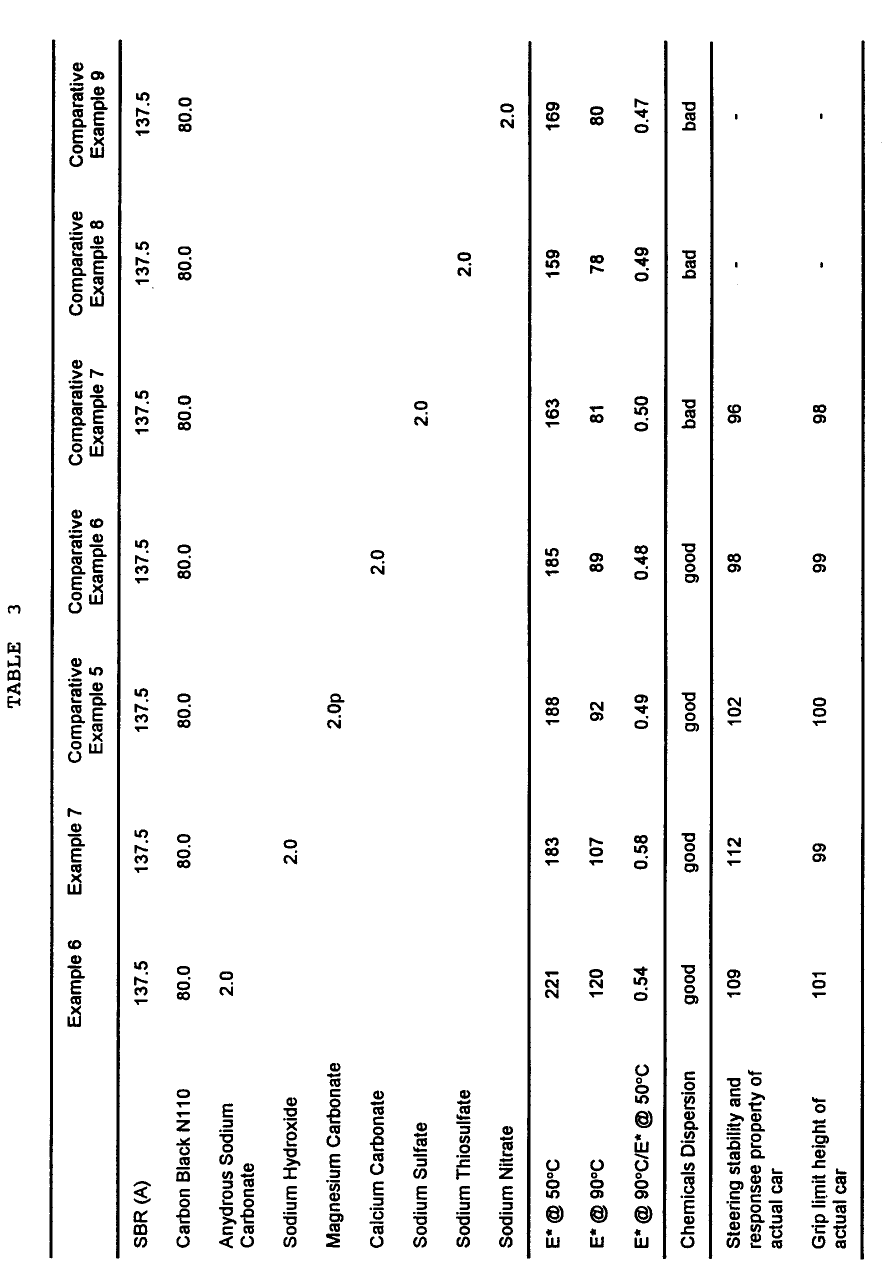

### Examples 8 to 12

Rubber compositions for tyre treads were prepared in the same manner as in Example 1 by using the same blend as that of Example 2 except that the rubber component, the carbon black and the aromatic oil were blended as shown in Table 4. The carbon black N110 has an average particle size of 18nm, the carbon black N220 has an average particle size of 22nm, and the carbon black N330 has an average particle size of 28nm. Steel radial tyres were made in the same manner as in Example 1 by using these rubber compositions of tyre tread.

The same tests as in Example 1 were carried out with respect of the resulting rubber compositions of tyre tread and tyres. The results are shown in Table 4.

**TABLE 4**

| | Example 8 | Example 9 | Example 10 | Example 11 | Example 12 |
|---|---|---|---|---|---|
| SBR(A) | 137.5 | 110.0 | 110.0 | 110.0 | 110.0 |
| Natrual Rubber | | 20.0 | | | |
| BR | | | 20.0 | 20.0 | 20.0 |
| Carbon Black N110 *1 | | 80.0 | 80.0 | | |
| Carbon Black N220 *2 | 80.0 | | | 110.0 | 70.0 |
| Carbon Black N330 *3 | | | | | |
| Aromatic Oil | | 7.5 | 7.5 | 37.5 | |
| Sodium Hydrongen Carbonate | 2.0 | 2.0 | 2.0 | 2.0 | 2.0 |
| E* @ 50°C | 231 | 230 | 233 | 243 | 215 |
| E* @ 90°C | 121 | 123 | 126 | 123 | 116 |
| E* @ 90°C/E* @ 50°C | 0.52 | 0.53 | 0.54 | 0.51 | 0.54 |
| Chemical Dispersion | good | good | good | good | good |
| Steering stability and response property of actual car | 110 | 108 | 109 | 110 | 105 |
| Grip limit height of actual car | 97 | 98 | 98 | 108 | 97 |

| | | | | | |
|---|---|---|---|---|---|
| *1 average particle size: 18nm | | | | | |
| *2 average particle size: 22nm | | | | | |
| *3 average particle size: 28nm | | | | | |

### Examples 13 to 23

Rubber compositions for tyre treads were prepared in the same manner as in Example 1 by using the same blend as that of Example 2 except that sodium hydrogen carbonate was changed to sodium-containing compounds as shown in Table 5. Steel radial tyres were made in the same manner as in Example 1 by using these rubber compositions of tyre tread.

The same tests as in Example 1 were carried out with respect to the resulting rubber compositions of tyre tread and tyres. The results are shown in Table 5.

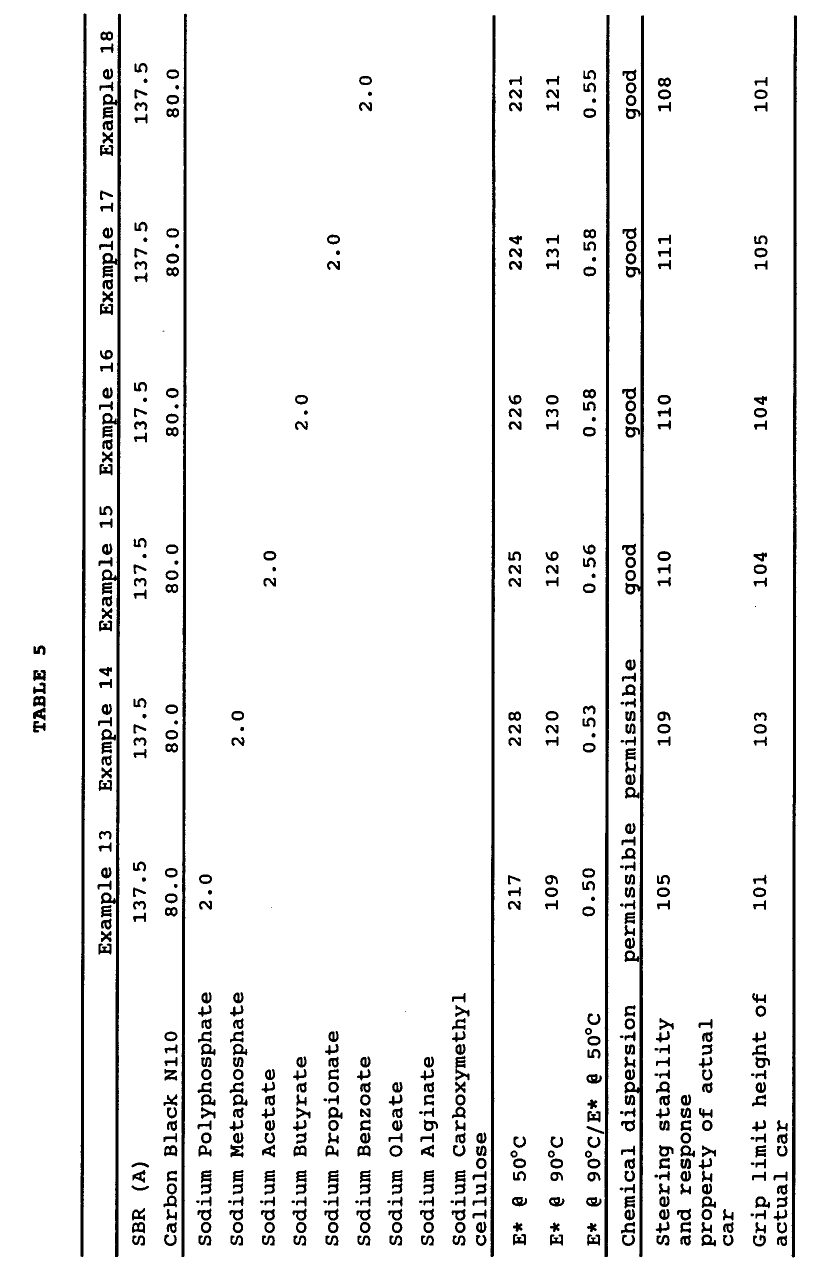

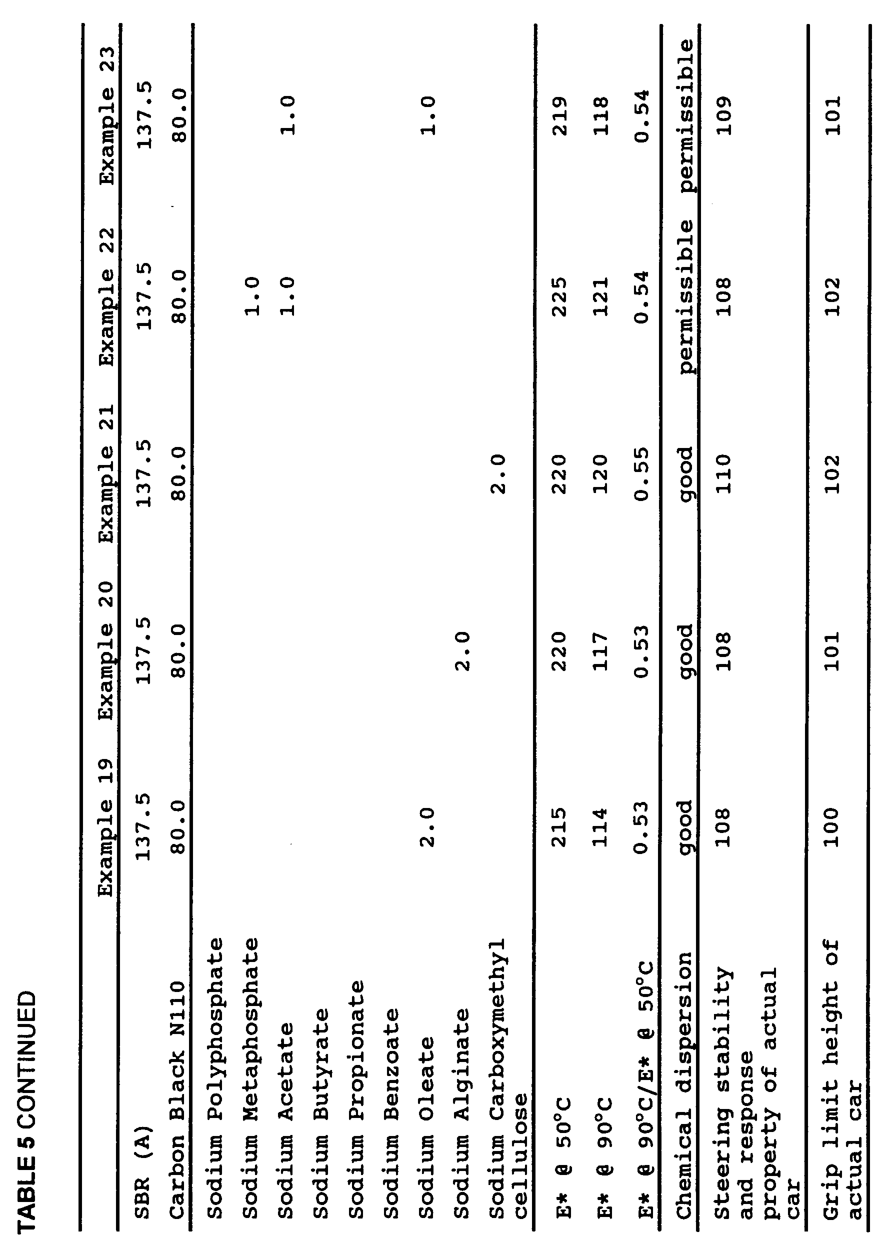

As is clear from Table 1, when sodium hydrogen carbonate was not included or the blended amount was less than 0.5 part, viscoelasticity at 90°C was low, and when the blending amount was more than 5 parts, chemical dispersion was bad. As is clear from Table 2, when emulsion-polymerised SBR with a bonded styrene content of not less than 40% was not contained, the grip limit on the car was worse. As is clear from Table 3, when the inorganic compound did not contain sodium, or the inorganic compound was not an appropriate compound even if it contains sodium, viscoelasticity at 90°C was low. As is clear from Table 4, when not less than 70 parts of a carbon black having an average particle size of not more than 25nm was contained, the grip limit on the car was not worse and steering stability and response property were excellent. As is clear from Table 5, when a basic sodium salt of organic acid was used, viscoelasticities at 50°C and 90°C were especially high and chemical dispersion was also excellent.

When the rubber composition of the tyre tread of the present invention is used, safe driving at high speed can be realised, since lowering the rigidity of the tread part due to heat generation of the tread is small, steering stability and response property on the car are excellent, and the grip limit on the car is high.

## Claims

1. A rubber composition for a tyre tread, which comprises an emulsion-polymerised styrene-butadiene rubber with a bonded styrene content of not less than 40% by weight which is contained in an amount of 10 to 100% by weight in a rubber component, and a sodium-containing basic inorganic compound and/or a basic sodium salt of organic acid which is blended at an amount of 0.5 to 5.0 parts by weight per 100 parts by weight of the rubber component.

2. The rubber composition of claim 1, characterized in that a carbon black having an average particle size of not more than 25nm is blended in an amount of not less than 70 parts by weight per 100 parts by weight of the rubber component.

## Patentansprüche

1. Eine Kautschukzusammensetzung für eine Reifenlauffläche, welche einen emulsionspolymerisierten Styrol-Butadien-Kautschuk mit einem gebundenen Styrolgehalt von nicht weniger als 40 Gewichts-%, welcher in einem Ausmaß von 10 bis 100 Gewichts-% in einer Kautschukkomponente enthalten ist, und eine Natrium enthaltende, basische, anorganische Verbindung und/oder ein basisches Natriumsalz organischer Säure umfaßt, welche in einem Ausmaß von 0,5 bis 5 Gewichtsteilen pro 100 Gewichtsteilen der Kautschukkomponente gemischt ist.

2. Die Kautschukzusammensetzung von Anspruch 1, dadurch gekennzeichnet, daß ein Ruß mit einer durchschnittlichen Partikelgröße von nicht mehr als 25nm in einem Ausmaß von nicht weniger als 70 Gewichtsteilen pro 100 Gewichtsteilen der Kautschukkomponente gemischt ist.

## Revendications

1. Composition de caoutchouc destinée à une bande de roulement, laquelle comprend un caoutchouc de styrène-butadiène polymérisé en émulsion ayant une teneur en styrène lié supérieure ou égale à 40% en masse, lequel est contenu à raison de 10 à 100% en masse dans un composant caoutchouc, ainsi qu'un composé inorganique basique contenant du sodium et/ou un sel de sodium basique d'acide organique qui est mélangé à raison de 0,5 à 5,0 parties en masse pour 100 parties en masse du composant caoutchouc.

2. Composition de caoutchouc selon la revendication 1, caractérisée en ce qu'un noir de carbone ayant une dimension moyenne de particules inférieure ou égale à 25 nm est mélangé à raison d'au moins 70 parties en masse pour 100 parties en masse du composant caoutchouc.
